# EUROPÄISCHE PATENTSCHRIFT

(11) **EP 2 236 314 B1**
(45) Veröffentlichungstag und Bekanntmachung des Hinweises auf die Patenterteilung: **28.12.2011**
(21) Anmeldenummer: 09157248.7
(22) Anmeldetag: 03.04.2009
(51) Int. Cl.: B60C 1/00, C08C 19/25, C08K 3/36, C08K 5/54, C08L 7/00, C08L 9/00

(54) **Verfahren zur Herstellung einer Kautschukmischung**
Method for producing a rubber mixture
Procédé de fabrication d'un mélange de caoutchouc

(43) Veröffentlichungstag der Anmeldung: 06.10.2010
(73) Patentinhaber: Continental Reifen Deutschland GmbH, 30165 Hannover (DE)
(72) Erfinder: Weinreich, Hajo, Dr., 31840, Hessisch Oldendorf (DE); De Risi, Francesca Romana, 30161, Hannover (DE)
(74) Vertreter: Finger, Karsten

(56) Entgegenhaltungen:
- EP-A- 1 520 732
- EP-A- 2 080 782
- WO-A-2008/132061

## Beschreibung

Die Erfindung betrifft ein Verfahren zur Herstellung einer Kautschukmischung, die zumindest einen Dienkautschuk, einen polaren Füllstoff, ein Silan-Kupplungsagens und ein hochvernetztes, mit polaren Gruppen oberflächenmodifiziertes Mikrogel auf der Basis eines Butadien-Kautschuks enthält, bei dem die Zumischung des polaren Füllstoffes, des Silan-Kupplungsagenzes und des mit polaren Gruppen oberflächenmodifizierten Mikrogels gleichzeitig erfolgt. Ferner betrifft die Erfindung eine Kautschukmischung, die nach dem Verfahren hergestellt ist, sowie einen Reifen, dessen Laufstreifen zumindest zum Teil aus der mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten und der Füllstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. Eine Verbesserung des Nassgriffs zieht z. B. in der Regel eine Verschlechterung des Rollwiderstandes nach sich. Um den Konflikt zwischen diesen sich gegensätzlich verhaltenden Reifeneigenschaften zu entschärfen, hat sich fein verteilte gefällte Kieselsäure als Füllstoff in Kautschukmischungen in Kombination mit wenigstens einem anderen Dienelastomer durchgesetzt. Die Kieselsäure wird allein oder in Kombination mit Ruß eingesetzt. Die Verteilung der Füllstoffe Kieselsäure und Ruß in der Polymermatrix sowie die Anbindung dieser Füllstoffe an die umgebenden Polymermoleküle haben großen Einfluss auf die Eigenschaften der aus solchen Mischungen hergestellten Vulkanisate. Verteilung und Anbindung lassen sich durch die Verwendung bestimmter Mischungsbestandteile und durch das Mischverfahren beeinflussen.

Im Allgemeinen erfolgt die Herstellung einer kieselsäurehaltigen Kautschukmischung in zwei Mischstufen, nämlich durch Herstellung einer Grundmischung und einer Fertigmischung. Während der Herstellung der Grundmischung werden alle Bestandteile der Mischung, wie Kautschuke, Füllstoffe, Verarbeitungshilfsmittel, Silan-Kupplungsagenzien, Alterungsschutzmittel, Ozonschutzmittel und weitere übliche Zusatzstoffe mit Ausnahme der Vulkanisationschemikalien (Schwefel, Vulkanisationsbeschleuniger, Harze u. a.), miteinander unter Energieeintrag vermischt. Dabei versucht man in der Regel, eine möglichst schnelle und gleichmäßige Verteilung der Bestandteile zu erzielen. Zur Verbesserung der Verarbeitbarkeit und um eine bessere Verteilung der Kieselsäure, die eine große spezifische hydrophile Oberfläche aufweist, in der Kautschukmischung zu erzielen, werden der Grundmischung in der Regel Silan-Kupplungsagenzien eingesetzt, die gleichzeitig zur Hydrophobierung der Kieselsäureoberfläche auch in der später folgenden Vulkanisation eine chemische Anbindung an die umgebenden Kautschukmoleküle ermöglichen. Nach der Fertigstellung der Grundmischung, deren Abkühlung und eventueller Lagerung werden dann zur Herstellung der Fertigmischung die restlichen Zusatzstoffe, i. A. die Vulkanisationschemikalien, bei niedriger Temperatur eingemischt.

Seit einiger Zeit werden auch sogenannte "Mikrogele" als Füllstoffe für Kautschuke verwendet. Unter Mikrogelen versteht man polymere Füllstoffe auf der Basis von Kautschukgelen, die im Allgemeinen aus Partikeln von peroxidvernetzten Dienkautschuken (BR, SBR, IR usw.) bestehen. Die Mikrogel-Partikel werden häufig durch Emulsions-Polymerisation bzw. Suspensions-Polymerisation hergestellt, wodurch sich Partikelgrößen zwischen ca. 5 und 1000 nm einstellen lassen.

Die Mikrogele werden als Ersatz für Kieselsäure oder Ruß verwendet, wobei ein vollständiger oder teilweiser Ersatz vorgesehen sein kann.

Zur Verbesserung der physikalischen/mechanischen Eigenschaften von Kautschukmischungen wurden auch bereits chemisch modifizierte Mikrogele eingesetzt. Mikrogele sind beispielsweise aus der EP 1 520 732 A1 und der WO 02/12389 und den hierin zitierten US 5 124408,

US 5 395 891, DE 197 67 29 und DE 199701 487 bekannt. Die WO 02/12389 nennt auch chemisch modifizierte Mikrogele, insbesondere hydroxylmodifizierte Mikrogele, wobei für die Modifikation die Acrylate und Methacrylate von Hydroxyethanol, Hydroxypropanol und Hydroxybutanol eingesetzt werden.

Ist das Mikrogel mit polaren Gruppen oberflächenmodifiziert, geht man davon aus, dass derartige Mikrogele die Silanisierungsreaktion zwischen polarem Füllstoff - in der Regel Kieselsäure - und Silan-Kupplungsagens stören, und gibt diese Mikrogele daher in einer gesonderten Mischstufe erst nach der bereits abgeschlossenen Silanisierung des Füllstoffes zur Mischung.

Ein Verfahren gemäß dem Oberbegriff des Anspruchs 1 ist aus der WO 2008/132061 A2 bekannt.

Der vorliegenden Erfindung liegt nun die Aufgabe zugrunde, ein Verfahren zur Herstellung einer Kautschukmischung, die insbesondere für Laufstreifen von Fahrzeugreifen geeignet ist, bereitzustellen, wobei die nach diesem Verfahren hergestellten Kautschukmischungen nach der Vulkanisation als Reifenlaufstreifen eine verringerten Rollwiderstand bei gleichbleibendem Nassbremsverhalten und hoher Abrieb- und Ozonbeständigkeit bewirken.

Gelöst wird diese Aufgabe erfindungsgemäß dadurch, dass die Kautschukmischung zumindest einen modifizierten Dienkautschuk enthält, der mit OH- und/oder Epoxygruppen modifiziert ist.

Durch das erfindungsgemäße Mischverfahrens konnte der Konflikt zwischen Nassbremsverhalten und Rollwiderstand entkoppelt werden, was vermutlich mit einer Wechselwirkung zwischen Mikrogel und umgebender Polymermatrix zu begründen ist. Wird das mit polaren Gruppen oberflächenmodifizierte Mikrogel hingegen erst in einem separaten Mischschritt nach der Einmischung von Kieselsäure und Silan-Kupplungsagens und nach der Silanisierungsreaktion eingemischt, liegt das Mikrogel als nicht mit der Polymermatrix mischbare Phase vor. Bei einem solchen phasenseparierten System kommt es häufig zu schlechteren Reifeneigenschaften. Mit Hilfe des erfindungsgemäßen Mischverfahrens konnte dieser Phasenseparation entgegengewirkt werden. Polarer Füllstoff, Silan-Kupplungsagens und Mikrogel wirken synergistisch zusammen und ermöglichen eine Interaktion zwischen Mikrogel und Polymermatrix.

Zusätzlich zur Lösung des Zielkonfliktes zwischen Nassbremsen und Rollwiderstand bietet eine nach dem erfindungsgemäßen Verfahren hergestellte Kautschukmischung auch erhebliche Vorteile im Abriebverhalten.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil >90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um 1,2-Polybutadien (sowohl in syndiotaktischer als auch in ataktischer Form) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Isopren-ButadienKautschuk, Butylkautschuk, Halobutylkautschuk oder Ethylen-Propylen-Dien-Kautschuk (EPDM), enthalten.

Als Mikrogele, deren Oberflächen mit polaren Gruppen modifiziert sind, können grundsätzlich alle im Stand der Technik bekannten und auch derzeit schon als Füllstoffe verwendeten bzw. vorgeschlagenen Mikrogele verwendet werden. Insbesondere werden Mikrogele auf der Basis von Dienkautschuken, vorzugsweise auf der Basis eines Styrol-Butadien-Kautschuks, eingesetzt.

Für die Oberflächenmodifizierung kommen als polare Gruppen z. B. OH-Gruppen, COOH-Gruppen, NH-Gruppen oder Siloxyl-Gruppen in Frage. Hinsichtlich der resultierenden Vulkanisateigenschaften hat sich allerdings die Oberflächenmodifizierung mit OH-Gruppen als besonders sinnvoll erwiesen.

Die Glasübergangstemperaturen der eingesetzten Mikrogele können über einen Bereich von T_{g} = -75 °C bis T_{g} = +60 °C variiert werden. Als besonders vorteilhaft hat es sich jedoch erwiesen, wenn das Mikrogel eine Glasübergangstemperatur T_{g} von -45 bis -10 °C aufweist. In diesem Bereich liegen auch die Glasübergangstemperaturen der zu erstellenden Kautschukmischungen für Reifenlaufstreifen.

Die Mikrogelpartikel können Teilchendurchmesser von ca. 5 bis 1000 nm aufweisen. Besonders gut lassen sich die Mikrogele jedoch bei Teilchendurchmessern von 30 bis 80 nm in eine Kautschukmischung einarbeiten.

Das mit polaren Gruppen oberflächenmodifizierte Mikrogel kann in Mengen von 1 bis 150 phr beim erfindungsgemäßen Verfahren der Kautschukmischung zugesetzt werden. Die besten Verbesserungen hinsichtlich Nassbremsverhalten, Rollwiderstand und Abriebverhalten lassen sich jedoch mit Mengen von 5 bis 30 phr erzielen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die bei dem erfindungsgemäßen Verfahren eingesetzten Silan-Kupplungsagenzien dienen gleichzeitig zur Verbesserung der Verarbeitbarkeit und zur Anbindung der polaren Füllstoffe, insbesondere Kieselsäure, an den Dienkautschuk und reagieren mit den oberflächlichen polaren Gruppen oder Silanolgruppen der Kieselsäure während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden.

Gemäß einer vorteilhaften Weiterbildung der Erfindung wird das oberflächenmodifizierte Mikrogel in einem vorgeschalteten Prozessschritt mit einem Silan-Kupplungsagens silanisiert, um die Wechselwirkung Polymer-polarer Füllstoff-Mikrogel weiter zu optimieren und die resultierenden Vulkanisateigenschaften weiter zu verbessern.

Als polare Füllstoffe können alle dem Fachmann bekannten Füllstoffe mit polaren Gruppen, wie z. B. Metalloxide und Metallhydroxide, in üblichen Mengen verwendet werden. Vorzugsweise wird als polarer Füllstoff feinverteilte, gefällte Kieselsäure eingesetzt, die eine Stickstoff-Oberfläche (BET-Oberfläche) (gemäß DIN 66131 und 66132) von 35 bis 350 m²/g, vorzugsweise von 145 bis 270 m²/g, eine CTAB-Oberfläche (gemäß ASTM D 3765) von 30 bis 350 m²/g, vorzugsweise von 120 bis 285 m²/g, ein Porenvolumen (gemäß DIN 66133) von 0,2 bis 3,4 mL/g, vorzugsweise von 0,7 bis 1,7 mL/g, einen mittleren Teilchendurchmesser von 10 bis 150 µm, vorzugsweise 10 bis 100 µm, und eine DBP-Zahl (gemäß ASTM D 2414) von 50 bis 300 mL/100 g, vorzugsweise von 150 bis 250 mL/100 g, aufweist. Derartige Kieselsäuren führen in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen.

Als besonders vorteilhaft für einen geringen Rollwiderstand im Reifen und einen geringen Abrieb hat es sich erwiesen, wenn der polare Füllstoff eine sogenannte nicht-hochdispergierbare-Kieselsäure ist, deren Füllstoffaggregate sich nicht so leicht beim Mischen aufbrechen lassen. Eine derartige Kieselsäure ist beispielsweise jene des Typs VN3 (Handelsname) der Firma Degussa.

Die Kautschukmischung enthält modifizierte Dienkautschuke. Diese können auf lösungs- oder emulsionpolymerisiertem Styrol-Butadienkautschuk basieren.

Gemäß der Erfindung enthält die Kautschukmischung einen Dienkautschuk, der mit OH- und/oder Epoxygruppen modifiziert ist. Mit derartigen Kautschuken in Kombination mit Mikrogel und Kieselsäure werden bei Verwendung des erfindungsgemäßen Mischverfahrens überraschenderweise besonders hohe Abrieb- und Ozonbeständigkeiten erzielt.

Der oder die modifizierten Dienkautschuk(e) ist/sind bevorzugt in Mengen von 30 bis 100 phr in der Kautschukmischung enthalten.

Die nach dem erfindungsgemäßen Verfahren hergestellte Kautschukmischung kann weitere übliche Zuschlagstoffe in üblichen Mengen enthalten.

So kann die Kautschukmischung weitere Füllstoffe wie Ruß, Kreide, Fasern oder nichtoberflächenmodifizierte Mikrogele enthalten.

Zu den weiteren Zuschlagstoffen zählen Weichmacher, Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Harze und Mastikationshilfsmittel, wie z. B. 2,2'-Dibenzamidodiphenyldisulfid (DBD).

Diese Zuschlagstoffe werden vor der Einmischung der Vulkanisationschemikalien in die Kautschukmischung in ein oder mehreren Mischstufen eingearbeitet. Nach der Fertigstellung dieser Grundmischung, deren Abkühlung und eventueller Lagerung werden dann zur Herstellung der Fertigmischung die restlichen Zusatzstoffe, i. A. die im Folgenden beschriebenen Vulkanisationschemikalien, bei niedriger Temperatur eingemischt.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfiden, Thiophosphaten oder Thiurambeschleunigern. Die Beschleuniger können auch in Kombination miteinander eingesetzt werden, wobei sich synergistische Effekte ergeben können.

Nach der Herstellung der Fertigmischung wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Fahrzeugluftreifenrohlings wie bekannt aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus Kautschukmischung unter Verwendung der erfindungsgemäßen Verfahrens hergestellt worden ist.

Die Erfindung soll nun anhand von Vergleichs- und Ausführungsbeispielen, die in den Tabellen 1 bis 3 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. Die unterschiedlichen Mischstufen sind in den Tabellen vermerkt. Die Mischungen wurden härtegleich eingestellt.

Mit den Mischungen gemäß den Tabellen wurden Reifen hergestellt, deren Laufstreifen aus den angegebenen Mischungen bestehen. Mit diesen Reifen wurden vergleichende Versuche bezüglich des ABS-Nassbremsens, des Rollwiderstandes und des Abriebs durchgeführt. Die Eigenschaften des Reifens mit einem Laufstreifen aus einer Mischung gemäß 1(V) bzw. 4(V) bzw. 10(V) wurden gleich 100 gesetzt, Werte größer als 100 bedeuten eine Verbesserung der entsprechenden Eigenschaft (Wertung, rating). Ferner wurden die Shore A-Härte bei Raumtemperatur gemäß DIN 53 505, die Rückprallelastizität bei Raumtemperatur und 70 °C gemäß DIN 53 512, der Verlustfaktor tan δ bei 0 und 60 °C aus dynamisch-mechanischer Messung gemäß DIN 53 513, die Reißdehnung bei Raumtemperatur gemäß DIN 53 504 und die Zugfestigkeit bei Raumtemperatur für die Mischungen im Labor ermittelt. Dazu erfolgte die Mischungsherstellung unter den in der Tabelle beschriebenen Stufen in einem Labortangentialmischer. Aus den Mischungen wurden Prüfkörper durch optimale Vulkanisation unter Druck bei 160 °C hergestellt. Zusätzlich wurde mit den Mischungen der Tabelle 3 eine dynamische Ozonprüfung mit 50 pphm Ozon (DIN 53509) bei 40 °C über 120 h und einer dynamischen Belastung von 0 bis 20 % Dehnung mit subjektiver Schadensbewertung ( 0 = kein Schaden, 5 = schwere Schäden) durchgeführt (Probenkörper gemäß DIN ISO 4661).

**Tabelle 1**

| **Bestandteile** | **Einheit** | **1(V)** | **2(V)** | **3(V)** |
|---|---|---|---|---|
| 1. Mischstufe | | | | |
| Naturkautschuk | phr | 30 | 30 | 30 |
| S-SBR^{a} | phr | 70 | 70 | 70 |
| Kieselsäure^{b} | phr | 80 | 80 | 80 |
| Ruß N-339 | phr | 5 | 5 | 5 |
| Mikrogel^{c} | phr | - | - | 20 |
| Prozessöl | phr | 20 | 20 | 20 |
| Ozonschutzwachs | phr | 2 | 2 | 2 |
| Alterungsschutzmittel | phr | 2,5 | 2,5 | 2,5 |
| Zinkoxid | phr | 2 | 2 | 2 |
| Stearinsäure | phr | 1 | 1 | 1 |
| 2. Mischstufe | | | | |
| Mikrogel^{c} | phr | - | 20 | - |
| Beschleuniger | phr | 3,6 | 3,6 | 3,6 |
| Schwefel | phr | 1,7 | 1,7 | 1,7 |

| **Vulkanisateigenschaften** | | | | |
|---|---|---|---|---|
| Shore-A-Härte RT | Shore A | 66 | 67 | 67 |
| Rückprallelast. RT | % | 27 | 24 | 24 |
| Rückprallelast. 70 °C | % | 48 | 52 | 51 |
| tan δ 0 °C | - | 0,306 | 0,395 | 0,348 |
| tan δ 60°C | - | 0,161 | 0,147 | 0,155 |

| **Reifeneigenschaften** | | | | |
|---|---|---|---|---|
| Rollwiderstand | | 100 | 99 | 103 |
| ABS-Nassbremsen | | 100 | 97 | 99,6 |
| Abrieb | | 100 | 100 | 114 |

| | | | | |
|---|---|---|---|---|
| ^{a}NS 116 R, Nippon Zeon, Japan, Vinylgehalt: 63 Gew.-%, Styrolgehalt: 21 Gew.-% ^{b}VN3, Evonic Degussa, Deutschland ^{c}Mikrogel auf der Basis von S-SBR mit OH-Gruppenmodifizierung, Glasübergangstemperatur Tg = -15 °C, Nanoprene M15OH, Lanxess, Deutschland | | | | |

Die Mischung 1(V) enthält kein Mikrogel. Bei 2(V) wird das Mikrogel in der zweiten Mischstufe zudosiert. Bei 3(V) wird das Mikrogel schon in der ersten Mischstufe zusammen mit der Kieselsäure und dem Silan-Kupplungsagens zudosiert. Aus der Tabelle 1 wird ersichtlich, dass die Zudosierung des Mikrogels in der ersten Mischstufe hinsichtlich der Eigenschaften Rollwiderstand, ABS-Nassbremsen und Abrieb die besten Ergebnisse liefert.

**Tabelle 2**

| **Bestandteile** | **Einheit** | **4(V)** | **5(V)** | **6(V)** | **7(V)** | **8(V)** | **9(V)** |
|---|---|---|---|---|---|---|---|
| 1. Mischstufe | | | | | | | |
| Naturkautschuk | phr | 30 | 30 | 30 | 30 | 30 | 30 |
| S-SBR^{a} | phr | 70 | 70 | 70 | 70 | 70 | 70 |
| Kieselsäure A^{b} | phr | 80 | - | - | 80 | - | - |
| Kieselsäure B^{c} | phr | - | 80 | - | - | 80 | - |
| Kieselsäure C^{d} | phr | - | - | 80 | - | - | 80 |
| Ruß N-339 | phr | 5 | 5 | 5 | 5 | 5 | 5 |
| Mikrogel^{e} | phr | - | - | - | 20 | 20 | 20 |
| Prozessöl | phr | 20 | 20 | 20 | 20 | 20 | 20 |
| Ozonschutzwachs | phr | 2 | 2 | 2 | 2 | 2 | 2 |
| Alterungsschutzmittel | phr | 2,5 | 2,5 | 2,5 | 2,5 | 2,5 | 2,5 |
| Zinkoxid | phr | 2 | 2 | 2 | 2 | 2 | 2 |
| Stearinsäure | phr | 1 | 1 | 1 | 1 | 1 | 1 |
| 2. Mischstufe | | | | | | | |
| Beschleuniger | phr | 3,6 | 3,6 | 3,6 | 3,6 | 3,6 | 3,6 |
| Schwefel | phr | 1,7 | 1,7 | 1,7 | 1,7 | 1,7 | 1,7 |

| **Vulkanisateigenschaften** | | | | | | | |
|---|---|---|---|---|---|---|---|
| Shore-A-Härte RT | ShoreA | 66 | 67 | 66 | 66 | 66 | 67 |
| Rückprallelast. RT | % | 28 | 24 | 27 | 26 | 24 | 24 |
| Rückprallelast. 70 °C | % | 50 | 44 | 48 | 53 | 50 | 51 |

| **Reifeneigenschaften** | | | | | | | |
|---|---|---|---|---|---|---|---|
| Rollwiderstand | | 100 | 94 | 98 | 100 | 102 | 101 |
| ABS-Nassbremsen | | 100 | 101 | 100 | 100 | 100 | 100 |
| Abrieb | | 100 | 95 | 90 | 105 | 112 | 104 |

| | | | | | | | |
|---|---|---|---|---|---|---|---|
| ^{a}NS 116 R, Nippon Zeon, Japan, Vinylgehalt: 63 Gew.-%, Styrolgehalt: 21 Gew.-% ^{b}Z1165, HD-Kieselsäure, Rhodia, Deutschland ^{c}RP200, Rhodia, Deutschland ^{d}VN3, Evonic Degussa, Deutschland ^{e}Mikrogel auf der Basis von S-SBR mit OH-Gruppenmodifizierung, Glasübergangstemperatur T_{g} = -15°C, Nanoprene M15OH, Lanxess, Deutschland | | | | | | | |

Aus der Tabelle 2 wird ersichtlich, dass durch Zudosierung von Mikrogel und Kieselsäure in der ersten Mischstufe gute Ergebnisse hinsichtlich des Reifenabriebs erzielt werden können. Eine besonders gute Verbesserung hinsichtlich des Zielkonfliktes Nassbremsen-Rollwiderstand bei hohem Abriebwiderstand kann allerdings durch die Kombination von nicht-HD-Kieselsäure, wie RP200 und VN3 es sind, mit Mikrogel (s. Mischungen 8(V) und 9(V) beim Mischverfahren erzielt werden.

**Tabelle 3**

| **Bestandteile** | **Einheit** | **10(V)** | **11(V)** | **12(V)** | **13(E)** |
|---|---|---|---|---|---|
| 1. Mischstufe | | | | | |
| Naturkautschuk | phr | 30 | 30 | 30 | 30 |
| S-SBR^{a} | phr | 70 | - | 70 | - |
| S-SBR^{b} | phr | - | 70 | - | 70 |
| Kieselsäure^{c} | phr | 80 | 80 | 80 | 80 |
| Ruß N-339 | phr | 5 | 5 | 5 | 5 |
| Mikrogel^{d} | phr | - | - | 20 | 20 |
| Prozessöl | phr | 20 | 20 | 20 | 20 |
| Ozonschutzwachs | phr | 2 | 2 | 2 | 2 |
| Alterungsschutzmittel | phr | 2,5 | 2,5 | 2,5 | 2,5 |
| Zinkoxid | phr | 2 | 2 | 2 | 2 |
| Stearinsäure | phr | 1 | 1 | 1 | 1 |
| 2. Mischstufe | | | | | |
| Beschleuniger | phr | 3,6 | 3,6 | 3,6 | 3,6 |
| Schwefel | phr | 1,7 | 1,7 | 1,7 | 1,7 |

| **Vulkanisateigenschaften** | | | | | |
|---|---|---|---|---|---|
| Shore-A-Härte RT | Shore A | 66 | 64 | 67 | 67 |
| Rückprallelast. RT | % | 24 | 25 | 22 | 22 |
| Rückprallelast. 70 °C | % | 47 | 50 | 49 | 51 |
| Reißdehnung | % | 440 | 411 | 360 | 386 |
| Zugfestigkeit | n/mm² | 13,1 | 12,4 | 12,0 | 14,3 |
| Ozonprüfung | | 4 | 3 | 4 | 2,5 |

| **Reifeneigenschaften** | | | | | |
|---|---|---|---|---|---|
| Rollwiderstand | | 100 | 106 | 104 | 109 |
| ABS-Nassbremsen | | 100 | 96 | 109 | 109 |

| | | | | | |
|---|---|---|---|---|---|
| ^{a}NS 116 R, Nippon Zeon, Japan, Vinylgehalt: 63 Gew.-%, Styrolgehalt: 21 Gew.-% ^{b}NS 616 R, Nippon Zeon, Japan, Vinylgehalt: 63 Gew.-%, Styrolgehalt: 21 Gew.-%, mit OH-Endgruppenmodifizierung ^{c}VN3, Evonic Degussa, Deutschland ^{d}Mikrogel auf der Basis von S-SBR mit OH-Gruppenmodifizierung, Glasübergangstemperatur Tg = -15 °C, Nanoprene M15OH, Lanxess, Deutschland | | | | | |

Die Tabelle 3 zeigt, dass bei dem erfindungsgemäßen Mischverfahren durch den gleichzeitigen Einsatz von modifiziertem S-SBR mit oberflächenmodifiziertem Mikrogel und Kieselsäure und Silan-Kupplungsagens, wie dies in Mischung 13(E) erfolgt ist, überraschenderweise eine besonders hohe Ozonbeständigkeit und ein besonders gutes Abriebverhalten, was sich aus einem besonders hohen Produkt aus Reißdehnung und Zugfestigkeit schließen lässt, erzielt werden kann. Dieses synergistische Zusammenwirken der genannten Substanzen ließ sich im Hinblick auf die Wirkung der jeweiligen einzelnen Zudosierungen, wie es in den Mischungen 11(V) und 12(V) erfolgte, keinesfalls erwarten.

## Patentansprüche

1. Verfahren zur Herstellung einer schwefelvernetzbaren Kautschukmischung, die zumindest einen Dienkautschuk, einen polaren Füllstoff, ein Silan-Kupplungsagens und ein hochvernetztes, mit polaren Gruppen oberflächenmodifiziertes Mikrogel auf der Basis eines Butadien-Kautschuks enthält, bei dem die Zumischung des polaren Füllstoffes, des Silan-Kupplungsagenzes und des mit polaren Gruppen oberflächenmodifizierten Mikrogels gleichzeitig erfolgt, **dadurch gekennzeichnet, dass** die Kautschukmischung zumindest einen modifizierten Dienkautschuk enthält, der mit OH- und/oder Epoxygruppen modifiziert ist.

2. Verfahren nach Anspruch 1, **dadurch gekennzeichnet, dass** die polaren Gruppen des oberflächenmodifizierten Mikrogels OH-Gruppen sind.

3. Verfahren nach Anspruch 1 oder 2, **dadurch gekennzeichnet, dass** das Mikrogel eine Glasübergangstemperatur Tg von -45 bis -10 °C aufweist.

4. Verfahren nach zumindest einem der Ansprüche 1 bis 3, **dadurch gekennzeichnet, dass** die Mikrogelpartikel einen Durchmesser von 30 bis 80 nm aufweisen.

5. Verfahren nach zumindest einem der Ansprüche 1 bis 4, **dadurch gekennzeichnet, dass** das mit polaren Gruppen oberflächenmodifizierte Mikrogel in Mengen von 5 bis 30 phr eingesetzt wird.

6. Verfahren nach zumindest einem der Ansprüche 1 bis 5, **dadurch gekennzeichnet, dass** der polare Füllstoff eine nicht-hochdispergierbare-Kieselsäure ist.

7. Verfahren nach zumindest einem der Ansprüche 1 bis 6, **dadurch gekennzeichnet, dass** die Kautschukmischung 30 bis 100 phr zumindest eines mit OH- und/oder Epoxygruppen modifizierten Dienkautschuks enthält.

8. Kautschukmischung, die nach zumindest einem der Ansprüche 1 bis 7 hergestellt ist.

9. Reifen, dessen Laufstreifen zumindest zum Teil aus einer mit Schwefel vulkanisierten Kautschukmischung nach Anspruch 8 besteht.

## Claims

1. Process for producing a sulphur-crosslinkable rubber mixture which comprises at least one diene rubber, one polar filler, one silane coupling agent and one highly crosslinked microgel surface-modified by polar groups, where this is based on a butadiene rubber, by simultaneously admixing the polar filler, the silane coupling agent and the microgel surface-modified by polar groups, **characterized in that** the rubber mixture comprises at least one modified diene rubber which has been modified by OH groups and/or by epoxy groups.

2. Process according to Claim 1, **characterized in that** the polar groups of the surface-modified microgel are OH groups.

3. Process according to Claim 1 or 2, **characterized in that** the glass transition temperature Tg of the microgel is from -45 to -10°C.

4. Process according to at least one of Claims 1 to 3, **characterized in that** the diameter of the microgel particles is from 30 to 80 nm.

5. Process according to at least one of Claims 1 to 4, **characterized in that** the amounts used of the microgel surface-modified by polar groups are from 5 to 30 phr.

6. Process according to at least one of Claims 1 to 5, **characterized in that** the polar filler is a non-highly-dispersible silica.

7. Process according to at least one of Claims 1 to 6, **characterized in that** the rubber mixture comprises from 30 to 100 phr of at least one diene rubber modified by OH groups and/or by epoxy groups.

8. Rubber mixture which has been produced according to at least one of Claims 1 to 7.

9. Tyre, the tread of which is composed at least in part of a sulphur-vulcanized rubber mixture according to Claim 8.

## Revendications

1. Procédé de fabrication d'un mélange de caoutchouc réticulable par du soufre, qui contient au moins un caoutchouc diène, une charge polaire, un agent de couplage silane et un microgel hautement réticulé, modifié en surface avec des groupes polaires, à base d'un caoutchouc de butadiène, selon lequel l'incorporation de la charge polaire, de l'agent de couplage silane et du microgel modifié en surface avec des groupes polaires a lieu simultanément, **caractérisé en ce que** le mélange de caoutchouc contient au moins un caoutchouc diène modifié qui est modifié avec des groupes OH et/ou époxy.

2. Procédé selon la revendication 1, **caractérisé en ce que** les groupes polaires du microgel modifié en surface sont des groupes OH.

3. Procédé selon la revendication 1 ou 2, **caractérisé en ce que** le microgel présente une température de transition vitreuse Tg de -45 à -10 °C.

4. Procédé selon au moins l'une quelconque des revendications 1 à 3, **caractérisé en ce que** les particules de microgel présentent un diamètre de 30 à 80 nm.

5. Procédé selon au moins l'une quelconque des revendications 1 à 4, **caractérisé en ce que** le microgel modifié en surface avec des groupes polaires est utilisé en quantités de 5 à 30 phr.

6. Procédé selon au moins l'une quelconque des revendications 1 à 5, **caractérisé en ce que** la charge polaire est une silice non hautement dispersible.

7. Procédé selon au moins l'une quelconque des revendications 1 à 6, **caractérisé en ce que** le mélange de caoutchouc contient 30 à 100 phr d'au moins un caoutchouc diène modifié avec des groupes OH et/ou époxy.

8. Mélange de caoutchouc, qui est fabriqué selon au moins l'une quelconque des revendications 1 à 7.

9. Pneu, dont la bande de roulement est constituée au moins en partie d'un mélange de caoutchouc selon la revendication 8 vulcanisé avec du soufre.
